Europäisches Patentamt

European Patent Office

Office européen des brevets

(19)

(11) Veröffentlichungsnummer : **0 629 302 B1**

(12) **EUROPÄISCHE PATENTSCHRIFT**

(45) Veröffentlichungstag der Patentschrift :
30.08.95 Patentblatt 95/35

(51) Int. Cl.$^6$ : **G06F 12/12**

(21) Anmeldenummer : 93903808.9

(22) Anmeldetag : 18.02.93

(86) Internationale Anmeldenummer :
PCT/DE93/00144

(87) Internationale Veröffentlichungsnummer :
WO 93/18460 16.09.93 Gazette 93/22

(54) VERFAHREN ZUM BINDEN VON PROGRAMMTEILEN ZU EINEM PROGRAMM.

(30) Priorität : 02.03.92 DE 4206567

(43) Veröffentlichungstag der Anmeldung :
21.12.94 Patentblatt 94/51

(45) Bekanntmachung des Hinweises auf die
Patenterteilung :
30.08.95 Patentblatt 95/35

(84) Benannte Vertragsstaaten :
DE FR GB

(56) Entgegenhaltungen :
WO-A-92/16894
WO-A-92/18932
IBM TECHNICAL DISCLOSURE BULLETIN Bd.
32, Nr. 5B, Oktober 1989, NEW YORK US Seiten 464 - 466 'Software Tool for Reducing Page
Fault Frequency'
SCIENCE Bd. 220, Nr. 4598, 13. Mai 1983,
Seiten 671 - 680 S.KIRKPATRICK ET AL.
"Optimization by Simulated Annealing"

(56) Entgegenhaltungen :
IBM JOURNAL OF RESEARCH AND DEVELOP-
MENT Bd. 18, Nr. 4, Juli 1974, NEW YORK US
Seiten 316 - 326 J.GECSEI 'Determining Hit
Ratios for Multilevel Hierarchies'
IBM SYSTEMS JOURNAL Bd. 5, Nr. 2, 1966, NY
Seiten 78 - 101 L.A.BELADY 'A Study of Replacement Algorithms for a Virtual-Storage Computer'

(73) Patentinhaber : SIEMENS
AKTIENGESELLSCHAFT
Wittelsbacherplatz 2
D-80333 München (DE)

(72) Erfinder : LINDMEIER, Horst
Ackerstrasse 27
D-81541 München (DE)
Erfinder : HAFER, Christian
Ottobrunnerstrasse 49
D-81737 München (DE)
Erfinder : PLANKL, Josef
Am Stiergarten 29
D-85635 Höhenkirchen-Siegertsbrunn (DE)
Erfinder : GÖSMANN, Klaus
Friedrichstrasse 23
D-80801 München (DE)
Erfinder : WESTERHOLZ, Karl
Dachauerstrasse 21 a
D-80335 Müchen (DE)

EP 0 629 302 B1

Anmerkung : Innerhalb von neun Monaten nach der Bekanntmachung des Hinweises auf die Erteilung des europäischen Patents kann jedermann beim Europäischen Patentamt gegen das erteilte europä-ische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent-übereinkommen).

**Beschreibung**

Verfahren zum Binden von Programmteilen zu einem Programm, das von einem nach dem Cache-Prinzip arbeitenden Rechner mit minimaler Laufzeit abgearbeitet werden kann.

Cache-Speicher oder Cache gehören zu den Standard SpeicherHierarchien, die die Architektur eines Rechners mitbestimmen. Ihre Funktion ist die eines Pufferspeichers zwischen einem Hauptspeicher und einem Prozessor. Der Cache als Pufferspeicher soll hierbei den schnellen Prozessor möglichst von dem langsamen Hauptspeicher entkoppeln. Der Cache besteht z.B. aus schnellen S-RAMS, die genau so schnell sind wie der Prozessor. Aufgrund ihres hohen Preises sind die Cache's aber wesentlich kleiner als der Hauptspeicher. Speicherhierarchien mit Cache sind bekannt und werden darum in ihrer Funktion nicht weiter erläutert.

Die Leistungsfähigkeit von Cache-Architekturen beruht auf dem Prinzip der Programm-Lokalität, ohne die eine Speicher-Hierarchie aus Cache und Hauptspeicher keinen Leistungsgewinn bringen würde. Bei der Programm-Lokalität wird zwischen zeitlicher und räumlicher Lokalität unterschieden. Zeitliche Lokalität besagt, daß, wenn ein Datum adressiert wurde, es wahrscheinlich ist, daß es bald wieder adressiert wird. Räumliche Lokalität besagt, daß, wenn ein Datum adressiert wurde, es wahrscheinlich ist, daß weitere Daten in seiner Nähe adressiert werden.

Um Daten zwischen Hauptspeicher und Cache zu transportieren, werden der Hauptspeicher und der Cache in sog. Cache-Blöcke unterteilt, die typisch 4 bis 128 Bytes enthalten können.

Dabei können diese Daten sowohl Programmteile sein, als auch Datenworte, die vom Programm bearbeitet werden.

Es gibt Design-Möglichkeiten des Caches, die für die Leistungsfähigkeit des gesamten Rechnersystems entscheidend sind. Weiterhin wird die Leistung des Cache aber auch von der verwendeten Software beeinflußt. Ein Cache hat seine maximale Leistung erreicht, wenn bei jedem Zugriff auf den Cache das angeforderte Datum im Cache vorhanden ist. Dieser Fall wird als Cache-Hit bezeichnet. Der Idealfall tritt jedoch immer nur kurzzeitig auf und wird durch Fehlzugriffe, sog. Cache-Misses, immer wieder unterbrochen, bei denen sich der Prozessor sich die benötigten Daten aus dem langsameren Hauptspeicher holen muß.

Die Wirksamkeit eines Cache ist somit einerseits von der Fehlzugriffsrate (Miss-Rate) als auch von der Bearbeitungszeit für einen Fehlzugriff abhängig. Die Bearbeitungszeit selbst ist von der Reaktionszeit des Hauptspeichers, der Cache-BlockGröße und der Busbandbreite abhängig. Die Fehlzugriffsrate ist ebenfalls von der Cache-Blockgröße abhängig. Bei großen CacheBlöcken sinkt die Miss-Rate aufgrund der räumlichen ProgrammLokalität, jedoch steigt andererseits die Bearbeitungszeit für ein Fehlzugriff. Das Optimum der Cache-Blockgröße ist von der gewählten Cache-Architektur wie auch von der Anwendung abhängig. Die Cache-Blöcke sind jedoch nicht die Ursache für einen Fehlzugriff. Hierfür ist die Programmlast, der Compiler und das Betriebssystem verantwortlich. Dabei muß gesagt werden, daß ein bestimmter Anteil von Fehlzugriffen unvermeidbar ist.

Eine Art des Fehlzugrifffes ist der sog. Verdrängungs-Miss oder Kollisions-Miss. Voraussetzung für eine VerdrängungsMiss ist, daß der Inhalt des adressierten Speichers sich bereits einmal im Cache befand. Dieser wuroe jedoch von später adressierten Speicherinhalten überschrieben, sodaß eine abermalige Adressierung zum Miss führt. Die Anzahl solcher Verdrängungs-Misses ist u.a. abhängig von der Cache-Größe und der Reihenfolge der einzelnen Programmteile, die zu dem Programm gebunden werden. Ein Programmteil kann dabei z.B. ein Programmmodul, eine Prozedur oder eine sonstige Befehlssequenz sein, z.B. auch ein Basisblock, also eine lineare Befehlsfolge. Die Reihenfolge solcher Programmteile hat einen Einfluß auf die Anzahl der Verdrängungs-Misses. Es gibt Reihenfolgen von Programmteilen, bei denen die Anzahl der Verdrängungs-Misses besonders klein ist.

Das der Erfindung zugrundeliegende Problem besteht darin, ein Verfahren anzugeben, mit dem eine Reihenfolge von zu einem Programm zu bindenden Programmteilen ermittelt werden kann, bei der die Laufzeit minimal ist. Dieses Problem wird gemäß den Merkmalen des Anspruchs 1 gelöst.

Es wird somit eine gezielte Suche im Permutationsraum der möglichen Reihenfolgen der Programmteile durchgeführt. Vorausgesetzt wird dabei, daß eine Bewertungsmöglichkeit für die Güte bezüglich der Laufzeit für eine Reihenfolge der Programmteile existiert. Eine solche Bewertungszahl stellt z.B. die Anzahl der benötigten Zyklen eines Programmlaufs dar. Diese Zahl kann z.B. aus Trace-Daten mit Hilfe eines Cache-Simulators gewonnen werden. Als eine weitere Möglichkeit zur Bewertung der Reihenfolge der Programmteile bezüglich der Laufzeit kann die Bewertung durch eine Kostenfunktion erfolgen, die den einzelnen Reihenfolgen der Programmteile Kosten zuordnet.

Die Bewertung entsprechend der Kostenfunktion geht aus von der Durchführung eines Trace-Verfahrens des zu untersuchenden Programms, das als Trace-Ergebnis Adreßreferenzen oder Adreßaufrufe enthält, die sich auf Code-Bereiche oder Datenbereiche beziehen. Das Trace-Verfahren wird ein einziges Mal durchgeführt und kann dann immer verwendet werden. Anschließend wird aus dem Trace-Ergebnis ermittelt, wie oft sich je zwei Programmteile höchstens gegenseitig verdrängen können, falls sie sich im Cache überlappen. Auch diese Auswertung muß nur einmal erfolgen, da die ermittelten Werte unabhängig von der Cache-Größe und der Reihenfolge der Programmteile des Programms sind. Für die Vorhersage der Verdrängungs-Misses einer Reihenfolge von Programmteilen bei fester Cache-Größe wird für jedes aus dem Trace-Ergebnis ermittelte Paar von Programmteilen untersucht, wie groß gemessen in Cache-Blöcken die Überlappung der beteiligten Programmteile ist. Anschliessend für jedes Paar von Programmteilen das Produkt zwischen der ermittelten Anzahl der kollidierenden Cache-Blöcke und der maximalen möglichen Anzahl von Verdrängungen gebildet. Die Summe über alle diese Produkte liefert dann ein Maß für die Anzahl der auftretenden Verdrängungs-Misses bei gegebener Cache-Größe und gegebener Reihenfolge der Progammteile eines Programms.

Die Bestimmung der Anzahl der Verdrängungen kann z.B. mit Hilfe eines LRU-Stackspeichers (LRU=Least Recently Used) erfolgen.

WO-A-9216894 (D1), WO-A-9218932 (D2) und IBM Techn. 464-466 (D3) erwähnen bereits Verfahren zum Optimieren von Programmen durch Veränderung der Reihenfolge von Programmteilen wobei die Reihenfolge jedoch gezielt und nicht pseudozufällig verändert wird. D1 und D2, die unter Artikel 54(3) EPÜ fallen, beschreiben jeweils wie ein optimales Programm für einen Rechner mit Cache gefunden wird, wobei die Anzahl der Cache-Misses klein ist.

In dem Artikel von S. KIRKPATRICK und andere "Optimization by Simulated Annealing" in Science, Band 220, Nr 4598, vom 13 Mai 1983, Seiten 671-679, wird ein Verfahren zum Optimieren der Länge der Verbindungen zwischen Chips beschrieben, wobei zufällig ausgewählte Schaltungen von einem Chip zum anderen vertauscht werden.

Mit dem erfindungsgemäßen Verfahren lassen sich mit geringem Rechenzeitaufwand gute Konfigurationen der ProgrammteileReihenfolgen finden, deren Kosten nur geringfügig höher sind als die der optimalen Konfiguration. Um noch bessere Konfigurationen zu finden, ist auszuschließen, daß sich die Trajektorie im Permutationsraum in einem lokalen Minimum der Kosten verfängt. Um dies zu vermeiden, müssen Programmteile Vertauschungen mit einer gewissen Wahrscheinlichkeit auch dann zugelassen werden, wenn sich höhere Kosten ergeben. Das kann so durchgeführt werden, daß das Verfahren durch eine Bedingung ergänzt wird, bei der die neue Reihenfolge von Programmteilen auch dann weiter untersucht wird, wenn eine Kostenverschlechterung eintritt, die kleiner ist als eine Zahl, die z.B. von einem Pseudozufallsgenerator erzeugt worden ist.

Andere Weiterbildungen der Erfindung ergeben sich aus den Unteransprüchen.

Anhand von Ausführungsbeispielen, die in den Figuren dargestellt sind, wird die Erfindung weiter erläutert. Es zeigen

Figur 1 die prinzipielle Darstellung mehrerer Reihenfolgen der Programmteile bei einem Programm zur Erläuterung des Verfahrens,

Figur 2 eine weitere Reihenfolge der Programmteile des Programms zur Erläuterung des Verfahrens,

Figur 3 eine prinzipielle Darstellung eines Stack-Speichers, wenn in ihm ein erster Aufruf eines Programmteils eingefügt wird,

Figur 4 eine prinzipielle Darstellung eines StacK-Speichers, wenn der aufgerufene Programmteil sich bereits im Stack-Speicher befindet,

Figur 5 eine prinzipielle Darstellung, die angibt, wie die höchste Anzahl von Verdrängungs-Misses mit Hilfe des Stack-Speichers ermittelt wird,

Figur 6 eine prinzipielle Darstellung der Abbildung der Programmteile auf dem Cache.

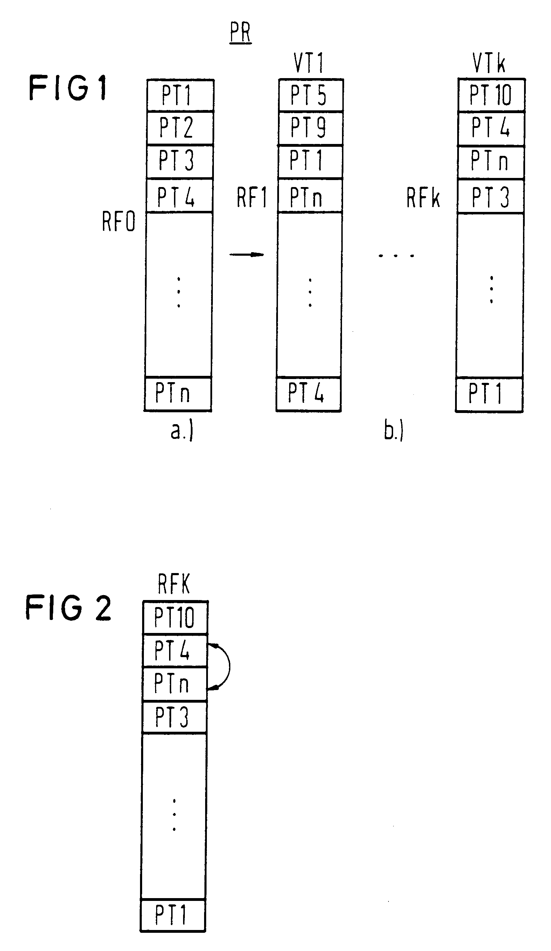

Das erfindungsgemäße Verfahren wird zunächst anhand von Figur 1 und Figur 2 erläutert.

Ausgegangen wird von einem Programm PR, bei dem die einzelnen Programmteile PT entsprechend Figur la gebunden sind (Reihenfolge RFO). Es sind dabei Prorammteile PT1 bis PTn als Beispiel angegeben. Die Programmteile können z.B. Prozeduren oder Funktionen oder sonstige Programmodule sein.

In einem ersten Schritt des Verfahrens werden nun pseudozufällig die Reihenfolgen der Programmteile geändert, sodaß neue Reihenfolgen des gebundenen Programms entstehen. Dadurch können z. B. k (beliebige ganze Zahl) neue Reihenfolgen der Programmteile entstehen. In Figur lb sind zwei solcher neuen Reihenfolgen gezeigt, bei der die erste (RF1) durch eine erste Vertauschung VT1 und die zweite (RFk) durch eine k-te Vertauschung VTK erzeugt worden ist.

Die durch Vertauschung der Reihenfolge der Programmteile entstandenen neuen Reihenfolgen des Programms gemäß Figur lb werden nun daraufhin bewertet, mit welcher Laufzeit sie beim Programmlauf ablaufen. Die dabei gefundenen Bewertungsergebnisse der Reihenfolge RF werden mieinander verglichen und dann die Reihenfolge von Programmteilen ausgewählt, deren Laufzeit minimal ist oder dessen Bewertungsergebnis am besten ist.

Anschließend wird von dieser ausgewählten Reihenfolge von Programmteilen ausgegangen und nun wiederum pseudozufällig zwei Programmteile vertauscht, wie dies in Figur 2 beispielhaft gezeigt ist. In Figur 2 werden z.B. die Programmteile PT4 und PTn miteinander vertauscht. Dies können auch Programmteile sein, die nicht benachbart zueinander liegen. Die dadurch entstehende neue Reihenfolge der Programmteile wird nun wiederum bewertet bezüglich der Laufzeit. Ist das Bewertungsergebnis günstiger als die der Ausgangsreihenfolge, so wird diese als aktuelle Reihenfolge weiter verwendet, sonst die Ausgangsreihenfolge beibehalten. Die nun aktuelle Reihenfolge der Programmteile wird wiederum diesem Schritt unterzogen, es werden also wiederum zwei Programmteile der aktuellen Reihenfolge pseudozufällig miteinander vertauscht und wiederum bewertet. Dieses Verfahren wird solange weitergeführt, bis ein vorgegebenes Abbruchkriterium erfüllt ist. Dieses Abbruchkriterium kann eine vorgegebene Anzahl von Vertauschungsversuchen sein oder eine vorgegebene Anzahl aufeinander folgender, erfolgloser Vertauschungsversuche sein.

Mit dem Verfahren lassen sich gute Konfigurationen der Programmteile-Reihenfolgen finden, deren Bewertungsergebnis höchstens geringfügig höher ist als das der optimalen Konfiguration. Um noch Reihenfolgen mit besserem Ergebnis zu finden, ist auszuschließen, daß sich die Trajektorie im Permutationsraum in einem lokalen Minimum des Bewertungsergebnisses verfängt, also bei Bewertung z.B. mit Hilfe der Kostenfunktion sich bei einem lokalen Minimum der Kosten verfängt. Um dies zu vermeiden, müssen Programmteilvertauschungen mit einer gewissen Wahrscheinlichkeit auch dann zugelassen werden, wenn sich höhere Kosten bei der Bewertung ergeben. Deshalb kann das Verfahren durch einen weiteren Schritt ergänzt werden, und zwar durch eine Bedingung, die neue Reihenfolge auch dann bei den weiteren Programmteil-Vertauschungen als aktuelle Reihenfolge zunehmen, wenn die Kostenverschlechterung kleiner ist als eine Zahl, die ein Pseudozufallszahlengenerator generiert hat (normiert auf die Höhe der Kosten).

Alternativ dazu kann auch die Bedingung

p  exp (-Kostenverschlechterung)

mit einer Pseudozufallszahl p ($0 \leqq p < 1$) verwendet werden, die zu große Verschlechterungen in den Kosten vermeidet.

Zur Bewertung der erzeugten Reihenfolgen der Programmteile bezüglich der Laufzeit des Programms kann ein bekannter CacheSimulator verwendet werden, wie er sich z.B. aus der Literaturstelle Alan Jay Smith, "Cache Memories", ACM Computing Surveys, Vol. 14, No. 3, Sept., 1982, pp. 473-530, James R.Goodman, "Using Cache Memory to Reduce Proecessor-Memory Traffic",Proc.of the 10th Annual Symposium on Computer Architecture, June 1983, pp. 124-131, Mark Hill and Alan Jay Smith, "Experimental Evaluation of On-Chip Microprocessor Cache Memories", Proceedings of the 11th Annual Symposium on Computer Architecture, June 1984, pp. 158-166 und James E.Smith and James R.Goodman, "A Study of Instruction Cache Organizations and Replacement Policies",Proceedings of the 10th Annual Symposium on Computer Architecture, June 1983, pp.132-137 ergibt. Es ist aber auch möglich, mit Hilfe einer Kostenfunktion die Bewertung durchzuführen. Wie dies erfolgt, wird anschließend beschrieben.

Der erste Schritt des Kostenfunktionsverfahrens besteht darin, mit einem Trace-Verfahren das vorgegebene Programm zu untersuchen, um festzustellen, wann bei Ablauf des Programms Programmteile aufgerufen werden. Dies kann z.B. mit dem folgenden Algorithmus 1, der im Pseudocode dargestellt ist, verdeutlicht werden, wobei hier als Programmteile Prozeduren verwendet werden. Derartige Trace-Verfahren sind bekannt und brauchen nicht ausführlich erläutert zu werden.

Algorithmus 1

```
Eingabeparameter:      keine
Ausgabeparameter:      keine
        solange (letztes Trace-Element nicht erreicht)
                hole Trace-Element
                bestimme Prozedurdeskriptor zu Trace-Element
                falls (Trace-Element = Prozeduraufruf)
                        erhöhe Prozeduraufrufzähler
                erhöhe Prozedur-Instruktionszähler
                falls (Trace-Element innerhalb Schleife)
                        solange (Trace-Element innerhalb Schleife)
                                bestimme Schleifendeskriptor zu Trace-Element
                                falls (Trace-Element = Prozeduraufruf)
                                        erhöhe Prozeduraufrufzähler für Schleife
                                erhöhe Schleifen-Instruktionszähler
                                falls (Trace-Element = Schleifenende)
                                        erhöhe Schleifen-Iterationszähler
                                bestimme nächste Schleife.
```

Ein Trace-Element des Algorithmus 1 beschreibt die Verwendung eines Codebereiches, z.B. einer Prozedur, Schleife, Basisblock oder Instruktion. Die einzelnen Trace-Elemente im Beispiel werden nun daraufhin untersucht, ob sie einen Prozeduraufruf darstellen und ob eine Schleife vorliegt. Mit Hilfe der Prozedurdeskriptoren wird ein Trace-Element der zugehörigen Prozedur zugeordnet, mit Schleifendeskriptoren wird geprüft, ob das Trace-Element von Schleifen umgeben ist. Im übrigen ist der Algorithmus 1 aus sich heraus verständlich.

Das Ergebnis des Traceverfahrens wird ausgewertet, um festzustellen, ob dynamische Konfliktmengen erzeugt worden sind.

Eine Auswertung erfolgt im Hinblick auf die Prozeduraufrufe und Prozedurrücksprünge des Programms. Demgemäß kann das Ergebnis des Traceverfahrens z.B. folgendermaßen dargestellt werden.

0 1..i..j..i..1 0

Dabei repräsentieren i, j Prozedurnummern, $0 \leqq i \leqq j \leqq n_p$, wobei Prozedur 0 stets die Startprozedur sei und $n_p$ die Prozedur mit der größen Prozedurnummer.

Anhand eines Beispieles sei dies weiter erläutert:

Die Prozedurfolge sei z.B.

(0 1 2 1 2 1 0 3 0)

Die Startprozedur 0 eines Programms ruft die Prozedur 1 auf, die Prozedur 1 ruft wiederum die Prozedur 2 auf. Wenn die Prozedur 2 abgearbeitet ist, findet ein Rücksprung zur aufrufenden Prozedur statt. Prozedur 1 ruft jetzt Prozedur 2 nochmals auf. Danach erfolgt erneut der Rücksprung zur Prozedur 1. Terminiert Prozedur 1, findet ein Rücksprung zu Prozedur 0 statt. Prozedur 0 ruft schließlich Prozedur 3 auf und das Programm ist beendet mit der Startprozedur 0.

Lokalitätsinformation ist im Trace-Ergebnis in Form von zeitlicher Aufrufhäufigkeit und Aufrufreihenfolge der Prozeduren enthalten. Dieses Trace-Ergebnis wird jetzt untersucht, ob Konfliktmengen vorliegen, die zu einem Verdrängungs-Miss führen können.

Eine Konfliktmenge $x_1$, $x_2$ liegt dann vor, wenn sich aus dem zeitlichen Ablauf des Traceverfahrens die Möglichkeit ergibt, daß eine im Cache befindliche Prozedur $x_1$ durch eine Prozedur $x_2$ verdrängt werden kann und umgekehrt. Betrachtet wird dazu eine Prozedur x zu einem Zeitpunkt $t_2$ und deren zeitlich letzte Verwendung zum Zeitpunkt $t_1$. Alle zwischen den Zeitpunkten $t_1$ und $t_2$ aufgerufenen Prozeduren sind Konfliktpartner zur Prozedur x. Das betrachtete Zeitintervall $(t_1, t_2)$, im weiteren Lokalitätsintervall genannt, enthält die Prozedur x genau zweimal, nämlich am Anfang $t_1$ und am Ende des Intervalls $t_2$. Das Lokalitätsintervall (0, 1, 2, 1, 2, 1, 0)

des Traceergebnisses aus obigem Beispiel enthält die Prozedur 0 am Anfang und Ende des Lokalitätsintervalls. Wie die Prozeduren aus dem Cache abgebildet werden, bzw. welche Prozeduren sich tatsächlich im Cache verdrängen, ist aus diesen Daten nicht ersichtlich. Wichtig ist aber, daß alle Prozeduren innerhalb des Lokalitätsintervalls potentiell mit der Prozedur x in Konflikt stehen können. Folgende Konfliktmengen lassen sich mit dem Lokalitätsintervall (0 1 2 1 2 1 0) bilden: (0,1): Prozedur 0 und 1 bilden eine Konfliktmenge (0,2): Prozedur 0 und 2 bilden eine Konfliktmenge (0,1,2): Prozedur 0,1 und 2 bilden eine Konfliktmenge Mit obigem Beispiel erhält man folgende Lokalitätsintervalle und Konfliktmengen (angeordnet nach dem zeitlichen Auftreten der Lokalitätsintervalle):

```
                            Lokalitätsintervall   Konfliktmengen
(0 1 2 1 2 1 0 3 0):        (0,3,0)               (0,3)
          |___|
(0 1 2 1 2 1 0 3 0):        (0,1,2,1,2,1,0)       (0,1), (0,2), (0,1,2)
 |_____|
(0 1 2 1 2 1 0 3 0):        (1, 2, 1)             (1, 2)
     |___|
(0 1 2 1 2 1 0 3 0):        (2, 1, 2)             (1, 2)
   |___|

(0 1 2 1 2 1 0 3 0):        (1, 2, 1)             (1, 2)
   |___|
```

Die Konfliktmengen kann man Gewichten nach der Anzahl ihrer korrespondierenden Lokalitätsintervalle im Prozedurtrace-Ergebnis.

In unserem Beispiel würden somit die Konfliktmengen folgendermaßen gewichtet:

(0, 1): gew ((0, 1)) = 1
(0, 2): gew ((0, 2)) = 1
(0, 3): gew (0, 3)) = 1
(1, 2): gew ((1, 2)) = 3
(0, 1, 2): gew ((0, 1, 2)) = 1

Wird die Gewichtung der mehrelementigen Konfliktmengen genauer betrachtet, so ist erkennbar, daß deren Gewichtung bereits in die Gewichtung der Untermengen eingegangen ist. Wird eine i-elementige Konfliktmenge gewichtet (i > 2), so werden auch alle 2-bis (i - 1)-elementigen Untermengen der Konfliktmengen gewichtet. Im obigen Beispiel ist die Gewichtung der Konfliktmenge (0, 1, 2) in der Gewichtung der Konfliktmengen (0,1), (0,2) und (1,2) enthalten. In einem ersten Ansatz genügt es also, für i-elementige Konfliktmengen nur 2-elementige Konfliktmengen zu betrachten.

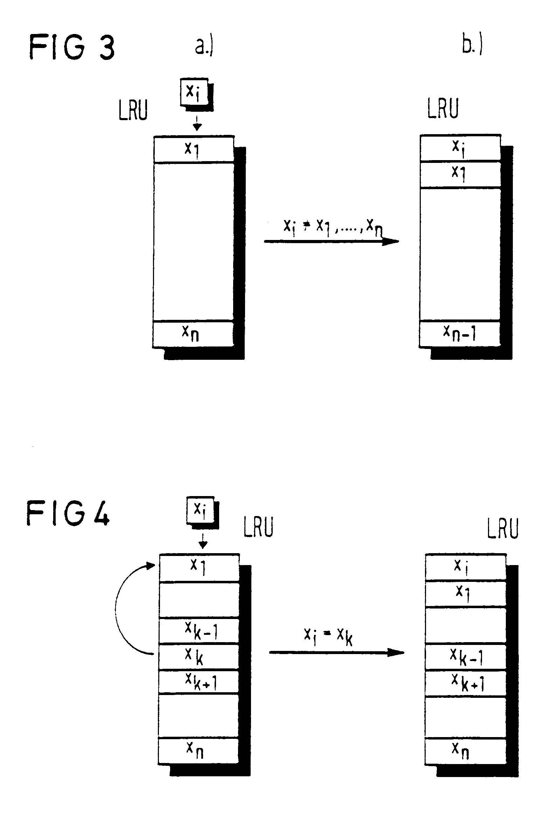

Die Bildung und Gewichtung der Konfliktmengen aus Lokalitätsintervallen läßt sich algorithmisch mit einem LRU-Stack-Speicher realisieren. Dies wird mit Hilfe der Figuren 3 bis 4 erläutert. Ein LRU-Stack $S_n$ (t): = $(x_1...x_n)$ ist ein Stack-speicher LRU der Tiefe n zur Aufnahme von maximal n-Stackelementen oder Prozedurnummern zum Zeitpunkt t. Nach Figur 1 enthält der Stackspeicher LRU $(x_1 ... x_n)$ Stackelemente, wobei $x_1$ das oberste Stackelement darstellt, das zuletzt referenziert oder aufgerufen worden ist. Wird ein Trace-Element $x_i$ bzw. die Prozedur $x_i$ aufgerufen, so wird sie auf den Stack gelegt. Unterscheidet sich eine Prozedurnummer $x_i$ von den bisherigen im Stack enthaltenen Nummern, so wird sie gemäß Figur 3b in den Stack eingefügt, d.h. an erster Stelle des Stackspeichers LRU wird $x_i$ eingefügt, an letzter Stelle das Element $x_n$ gelöscht. Alle übrigen Stackelemente werden um eine Position verschoben.

Wird jedoch eine Prozedur aufgerufen, die bereits im Stackspeicher LRU enthalten ist, dann wird gemäß Figur 4 vorgegangen. Die Prozedurnummer sei $x_i$, sie wird gemäß Figur 4b an die oberste Stelle des Stackspeichers LRU eingefügt, die übrigen Stackelemente bis zum bisherigen Stackelement $x_i = x_k$ um eine Stelle verschoben. Somit werden die Elemente eines Lokalitätsintervalls mit dem LRU-Stackspeicher identifiziert, wenn man alle Elemente des Stackspeichers mit der Prozedur $x_i$ zum Zeitpunkt t des Prozedurtraces vergleicht. Ist die Prozedur $x_i$ zum Zeitpunkt t im LRU-Stackspeicher, so sind die Stackelemente $x_1, ... x_i - 1$ Elemente des korrespondierenden Lokalitätsintervalls bzw. bilden Konfliktpartner zur Prozedur $x_i$.

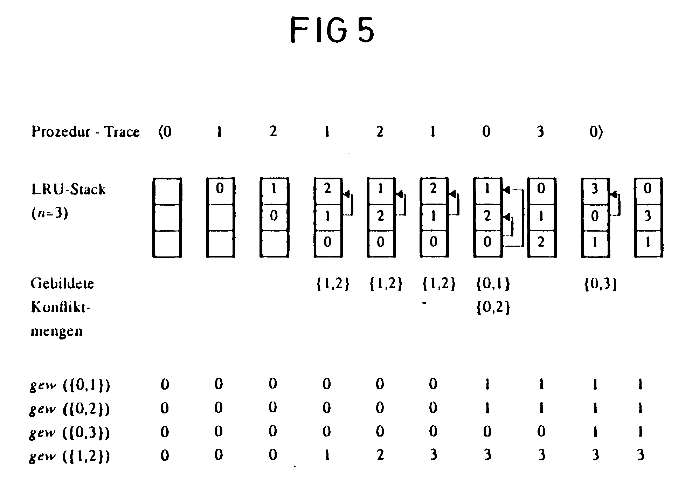

Mit Hilfe der Figur 5 wird dieses Verfahren für das angegebene Beispiel gezeigt. Es wird dabei davon ausgegangen, daß der Stackspeicher LRU n = 3 Elemente aufnehmen kann. Dies ist ausreichend, da in dem Beispiel nur drei verschiedene Prozeduren außer der Startprozedur vorhanden sind.

Figur 5 zeigt nun für das Beispiel zu verschiedenen Zeitpunkten den Inhalt des Stackspeichers LRU. Zu dem Zustand des Stackspeichers ist angegeben, welche Konfliktmengen sich ergeben und wie diese Konfliktmengen zu gewichten sind. Zunächst wird die Prozedur 0 in den Stackspeicher geschoben, anschließend die Prozedur 1 gefolgt von der Prozedur 2. Wenn jetzt wiederum die Prozedur 1 aufgerufen wird, wie dies im Beispiel der Fall ist, dann wird eine erste Konfliktmenge, gebildet aus den Prozedurnummern 1 und 2, festgestellt. Dementsprechend wird in der zugeordneten Spalte die Reihenfolge der Prozeduren 1, 2 mit 1 gewichtet. Anhand der Figur 5 kann das weitere Vorgehen leicht erkannt werden. Auf diese Weise lassen sich die Konfliktmengen der Prozeduren in den Lokalitätsintervallen feststellen und auch eine Gewichtung durchführen.

Es ist zu sehen, daß die Feststellung einer Konfliktmenge immer erfordert, daß eine Prozedur mindestens zweimal referenziert, also adressiert worden ist. Beim ersten Aufruf wird die Prozedur nur in den LRU-Stackspeicher aufgenommen. Beim zweiten Aufruf wird dann die Konfliktmenge festgestellt und gewichtet.

Ein Algorithmus zum Bilden und Gewichten der Konfliktmengen könnte wie Algorithmus 2 aussehen:

Algorithmus 2

```
Eingabeparameter:     keine
Ausgabeparameter:     keine
        solange (letztes Trace-Element nicht erreicht)
                hole Trace-Element
                Stackelement₁: = top_1rustack()
                solange (Stack-Element₁ # letztes Stack-Element)
                        falls (Trace-Element = Stack-Element1)
                                Stack-Element₂: = top 1rustack()
                                solange (Stack-Element₁ # Stack-Element₂)
                        valuate_conflictset (Trace-Element, Stack-Element₂)
```

hole nächstes Stack-Element$_2$

**sonst** hole nächstes Stack-Element$_1$

Der Algorithmus ist wiederum im Pseudocode geschrieben und damit leicht verständlich. Es wird das Stackelement 1 und das Stackelement 2 unterschieden. Das Stackelement 1 entspricht dem Element des Traceergebnis, das mit den im Stackspeicher enthaltenen Stackelementen 2 verglichen wird. Solange das Stackelement 1 ungleich ist zum Stackelement 2 wird die Nummer des Stackelementes 2 notiert und ebenso das Traceelement oder das Stackelement 1.

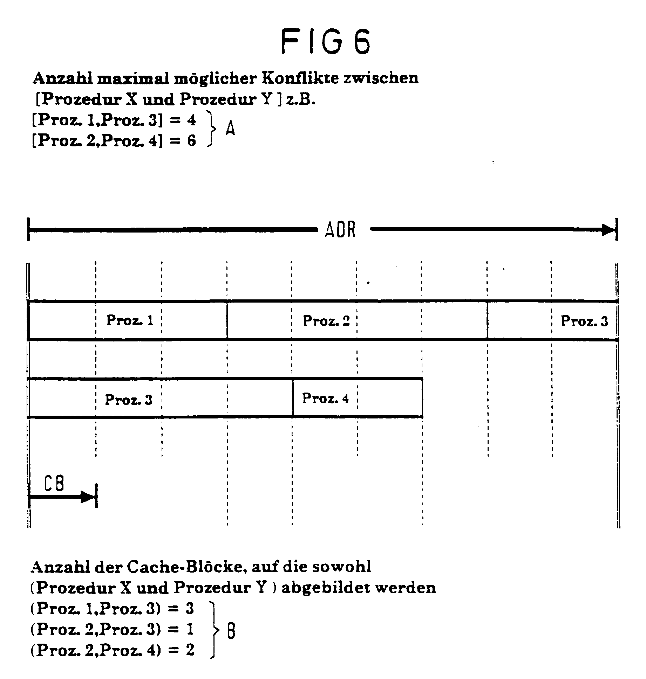

Nachdem die Konfliktmengen festgestellt worden sind und zudem die Gewichtung durchgeführt worden ist, wird für jedes aus dem Traceverfahren ermittelte Paar untersucht, wie groß gemessen in Cacheblöcken die Überlappung der beteiligten Programmteile ist. Dazu ist die Cachegröße vorgegeben. Der Verfahrensschritt kann anhand der Figur 6 nachvollzogen werden. Es wird davon ausgegangen, daß die Anzahl der maximal möglichen Konflikte (siehe A), d.h. die gewichteten Konfliktmengen zwischen der Prozedur 1 und der Prozedur 3 gleich 4 und der Prozedur 2 und Prozedur 4 gleich 6 ist. Unter der Annahme, daß die Prozeduren entsprechend der Figur aufeinanderfolgen und unter der Annahme, daß der Adreßraum ADR des Caches in Cacheblöcke CB unterteilt ist, ergibt sich die Abbildung des Programms aus den Prozeduren 1 bis 4 aus der Darstellung nach Figur 6. Die Prozedur 1 nimmt drei Cacheblöcke ein, die Prozedur vier Cache-blöcke, die Prozedur 3 sechs Cacheblöcke und die Prozedur 4 zwei Cacheblöcke. Wenn der Adreßraum des Cache neun Cacheblöcke enthält, dann kann die Prozedur 1 und Prozedur 2 ganz im Cache stehen, die Prozedur 3 nur mit zwei Cacheblöcken und die Prozedur 4 überhaupt nicht. Das heißt eine Abbildung dieses Programms aus vier Prozeduren auf den Cachespeicher der Figur 4 würde ergeben, daß der Anzahl der kollidierenden Cacheblöcke bei Prozedur 1 und 3 gleich 3 ist, bei Prozedur 2 und Prozedur 3 gleich 1 und bei Prozedur 2 und Prozedur 4 gleich 2 ist (siehe B). Die Untersuchung des Programms auf mögliche Konfliktmengen hat ergeben, daß nur zwischen der Prozedur 1 und der Prozedur 3 bzw. der Prozedur 2 und der Prozedur 4 eine Konfliktmenge besteht. Die mögliche Anzahl von Verdrängungs-Misses kann sodann nach folgender Formel berechnet werden:

Summe über aller Konfliktpaare nach A multipliziert mit der Anzahl gemeinsam genutzter Cacheblöcke nach B ergibt im Ausführungsbeispiel der Figur 4 folgenden Wert:

$$3 \times (\text{Prozedur 1, Prozedur 3}) + 2 \times (\text{Prozedur 2, Prozedur 4}) = 24$$

Bei einer festgelegten Folge der Prozeduren eines Programmes gemäß Figur 4 können somit maximal 24 Verdrängungs-Misses auftreten. Für eine andere Folge der Prozeduren des Programms würde sich dieser Wert ändern. Sdmit wird mit dem Verfahren ein Weg gezeigt, wie bei einer Reihenfolge von Programmteilen, z.B. Prozeduren, die Anzahl der höchsten möglichen Verdrängungs-Misses feststellbar ist.

## Patentansprüche

1. Verfahren zum Binden von Programmteilen (PT1...PTn) zu einem Programm, das von einem nach dem Cache-Prinzip arbeitenden Rechner mit minimaler Laufzeit abgearbeitet werden kann,
   a) bei dem pseudozufällig eine Mehrzahl von Reihenfolgen (RF1...RFk) der Programmteile erzeugt werden und die Mehrzahl der Reihenfolgen bezüglich der Laufzeit bewertet werden und eine erste Reihenfolge von Programmteilen ausgewählt wird, bei denen die Anzahl der Cache-Misses klein ist,
   b) bei dem mit der ersten Reihenfolge der Programmteile weitergearbeitet wird (RFk) und jeweils pseudozufällig zwei Programmteile vertauscht werden und dann festgestellt wird, ob die geänderte Reihenfolge zu einem besseren Bewertungsergebnis führt und für diesen Fall mit der geänderten Reihenfolge als aktuelle Reihenfolge weitergearbeitet wird, sonst mit der nicht geänderten Reihenfolge der Programmteile.

2. Verfahren nach Anspruch 1,
   bei dem der Schritt (b) solange durchgeführt wird bis ein vorgegebenes Abbruchkriterium erfüllt ist.

3. Verfahren nach Anspruch 2, bei dem trotz negativem Ergebnis der Bewertung mit der geänderten Reihenfolge der Programmteile weitergearbeitet wird, wenn die Verschlechterung des Bewertungsergebnisses kleiner ist als eine von einem Pseudozufallszahlengenerator erzeugte Zufallszahl, die auf das Bewertungsergebnis der aktuellen Reihenfolge normiert ist.

4. Verfahren nach einem der Ansprüche 2 oder 3, bei dem das Bewertungsverfahren dann beendet wird, wenn eine vorgegebene Anzahl von Bewertungen durchgeführt worden ist.

5. Verfahren nach einem der vorhergehenden Ansprüche,
bei dem die Bewertung mit Hilfe eines Cache-Simulators durchgeführt wird.

6. Verfahren nach einem der Ansprüche 1 bis 4,
bei dem die Bewertung mit Hilfe einer Kostenfunktion auf folgende Weise durchgeführt wird,
a) ein Trace-Verfahren für das Programm aus dem Programteilen wird durchgeführt, das als Trace-Ergebnis Adreßaufrufe zu Codebereichen oder Datenbereichen der Programmteile enthält,
b) es wird aus dem Trace-Ergebnis festgestellt, wie oft sich zwei Programmteile höchstens verdrängen können,
c) es wird für jeweils ein Paar von Programmteilen festgestellt, wie groß in Cache-Blöcken ausgedrückt und bei Abbildung des Programms auf den Cache die Überlappung dieses Programmteilepaares ist,
d) es wird für jedes Paar von Progammteilen das Produkt aus der Anzahl der Verdrängungen und der Anzahl der kollidierenden sich überlappenden Cache-Blöcke gebildet,
e) es wird zur Ermittlung der Anzahl der Verdrängungs-Misses des Programms und damit als Bewertungsergebnis die Summe über alle Produkte gebildet.

7. Verfahren nach Anspruch 6, bei dem zur Bestimmung der Anzahl der Verdrängungen der Programmteilepaare anhand der Aufruffolge der Programmteile festgestellt wird, welche Programmteile zwischen zwei aufeinanderfolgenden Aufrufen eines Programmteiles liegen und daraus ermittelt wird, wie oft die Programmteile eines Paares nacheinander aufgerufen werden.

8. Verfahren nach Anspruch 7, bei dem zur Bestimmung der Anzahl der Verdrängungen ein LRU-Stack-Speicher verwendet wird, in dem die die aufrufenden Programmteile kennzeichnenden Elemente hineingeschoben werden,
bei dem bei Aufruf eines ersten Programmteiles aus dem Trace-Ergebnis durch Vergleich dieses ersten Programmteiles mit bereits im LRU-Stackspeicher enthaltenen Programmteil von oben beginnend festgestellt wird, ob dieser erste Programmteil schon einmal aufgerufen worden ist und für diesen Fall die oberhalb des im LRU-Stackspeicher enthaltenen ersten Programmteiles liegende Programmteile notiert werden und anschließend der erste Programmteil an die erste Stelle des LRU-Stackspeichers geschoben wird.


## Claims

1. Method for linking program parts (PT1...PTn) to form a program which can be executed with minimum running time by a computer operating according to the cache principle,
a) wherein a plurality of sequences (RF1...RFk) of program parts is generated pseudo-randomly and the plurality of sequences is evaluated with respect to the running time and a first sequence of program parts, in which the number of cache misses is small, is selected,
b) wherein processing continues with the first sequence of program parts (RFk), and in each case two program parts are permuted pseudo-randomly and it is then established whether the altered sequence leads to a better evaluation result, and in this case processing continues with the altered sequence as the current sequence, otherwise with the unaltered sequence of program parts.

2. Method according to Claim 1,
wherein the step (b) is performed until a predetermined termination criterion is satisfied.

3. Method according to Claim 2, wherein despite a negative result of the evaluation, processing continues with the altered sequence of program parts if the disadvantage of the evaluation result is less than a random number generated by a pseudo-random number generator scaled to the evaluation result of the current sequence.

4. Method according to one of Claims 2 or 3, wherein the evaluation procedure is terminated whenever a predetermined number of evaluations has been performed.

5. Method according to one of the preceding claims, wherein the evaluation is performed with the aid of a cache simulator.

**6.** Method according to one of Claims 1 to 4, wherein the evaluation is performed with the aid of a cost function in the following manner:

a) a trace procedure for the program comprising the program part that contains address calls to code areas or data areas of the program parts as trace result is performed,

b) it is established from the trace result how often two program parts can displace each other at most,

c) it is established for a pair of program parts in each case how large the overlapping of said program part pair is, expressed in cache blocks and given mapping of the program onto the cache,

d) for each pair of program parts, the product of the number of displacements and the number of colliding, mutually overlapping cache blocks is formed,

e) the sum of all products is formed to calculate the number of displacement misses of the program and hence as evaluation result.

**7.** Method according to Claim 6, wherein, for calculating the number of displacements of the program part pairs, it is established on the basis of the call sequence of the program parts which program parts lie between two successive calls of a program part and it is calculated from this how often the program parts of a pair are successively called up.

**8.** Method according to Claim 7, wherein an LRU stack memory is used to calculate the number of displacements, in that the elements indicating the calling program parts are inserted, and wherein, when a first program part is called up, by comparing said first program part with a program part already contained in the LRU stack memory it is established from the trace result, beginning at the top, whether said first program part has already been called up before, and if this is the case the program parts lying above the first program part contained in the LRU stack memory are noted and subsequently the first program part is shifted to the first position of the LRU stack memory.

## Revendications

**1.** Procédé pour réunir des parties de programme (PT1...FTn) en un programme qui peut être élaboré par un ordinateur travaillant selon le principe de l'antémémoire, avec un temps de traitement minimum, et selon lequel

a) on forme, d'une manière pseudo-aléatoire, une multiplicité de suites (RF1...RFk) des parties du programme et on évalue la multiplicité des séquences, en rapport avec le temps de transit et on sélectionne une première suite de parties de programme pour lesquelles le nombre des insuccès dans l'antémémoire est faible,

b) on continue le traitement (RFK) avec la première suite des parties de programme et on simule respectivement de façon pseudo-aléatoire deux parties de programme et on détermine ensuite si la suite modifiée conduit à un meilleur résultat d'évaluation et, dans ce cas, on poursuit le traitement avec la suite modifiée en tant que suite actuelle, sinon on poursuit le programme avec la suite non modifiée des parties de programme.

**2.** Procédé suivant la revendication 1, selon lequel, on exécute l'étape b) jusqu'à ce qu'un critère prédéterminé de troncature soit satisfait.

**3.** Procédé suivant la revendication 2, selon lequel en dépit d'un résultat négatif de l'évaluation, on poursuit le traitement avec la suite modifiée des parties de programme, lorsque l'altération du résultat de l'évaluation est inférieure à un nombre aléatoire produit par un générateur de chiffres pseudo-aléatoires et qui est normalisé par rapport au résultat d'évaluation de la suite actuelle.

**4.** Procédé suivant l'une des revendications 2 ou 3, selon lequel le procédé d'évaluation est arrêté lorsqu'un nombre prédéterminé d'évaluations a été exécuté.

**5.** Procédé suivant l'une des revendications précédentes, selon lequel l'évaluation est exécutée à l'aide d'un simulateur à antémémoire.

**6.** Procédé suivant l'une des revendications 1 à 4, selon lequel l'évaluation est exécutée à l'aide d'une fonction de coût de la manière suivante :

a) on exécute un procédé Trace pour le programme à partir de la partie de programme qui contient, en tant que résultat de Trace, des appels d'adresses vers des zones de codes ou des zones de données des parties de programme,

b) on détermine à partir du résultat de Trace avec quelle fréquence deux parties de programme peuvent être décalées au maximum,

c) pour respectivement un couple de parties de programme on détermine avec combien de blocs d'antémémoire est exprimé le chevauchement de ce couple de parties de programme, qui existe lors de la formation du programme dans l'antémémoire,

d) pour chaque couple de parties de programme, on forme le produit du nombre des décalages par le nombre des blocs de l'antémémoire en chevauchement, qui sont en collision,

e) pour la détermination du nombre des coups non réussis de décalage du programme et, par conséquent, en tant que résultat d'évaluation, on forme la somme sur tous les produits.

7. Procédé suivant la revendication 6, selon lequel pour déterminer le nombre des décalages des couples de parties de programme sur la base de la suite d'appels des parties de programme on détermine quelles parties du programme sont situées entre deux appels successifs d'une partie de programme et on détermine à partir de là avec quelle fréquence les parties de programme d'un couple de parties de programme sont appelées successivement.

8. Procédé suivant la revendication 7, selon lequel, pour déterminer le nombre de décalages, on utilise une mémoire LRU-Stack, dans laquelle on insère les éléments qui caractérisent les parties de programme appelantes, et selon lequel, lors de l'appel d'une première partie de programme à partir du résultat de Trace, et par comparaison de cette première partie de programme à une partie de programme déjà contenue dans la mémoire LRU-Stack, on détermine, en commençant à partir du haut, si cette première partie de programme a déjà été appelée une fois et, pour ce cas, on note les parties de programme qui sont situées au-dessus de la première partie de programme contenue dans la mémoire LRU-Stack, et ensuite on transfère la première partie de programme à la première position de la mémoire LRU-Stack.

PR

FIG 1

a.)

b.)

FIG 2

FIG 3

FIG 4

# FIG 5

| Prozedur - Trace | ⟨0 | 1 | 2 | 1 | 2 | 1 | 0 | 3 | 0⟩ |
|---|---|---|---|---|---|---|---|---|---|

LRU-Stack ($n=3$)

| | 0 | 1 | 2 | 1 | 2 | 1 | 0 | 3 | 0 |
| | | 0 | 1 | 2 | 1 | 2 | 1 | 0 | 3 |
| | | | 0 | 0 | 0 | 0 | 0 | 2 | 1 | 1 |

Gebildete Konflikt-mengen

| | | | {1,2} | {1,2} | {1,2} | {0,1} | | {0,3} | |
| | | | | | | {0,2} | | | |

| | ⟨0 | 1 | 2 | 1 | 2 | 1 | 0 | 3 | 0⟩ |
|---|---|---|---|---|---|---|---|---|---|
| $gew(\{0,1\})$ | 0 | 0 | 0 | 0 | 0 | 0 | 1 | 1 | 1 | 1 |
| $gew(\{0,2\})$ | 0 | 0 | 0 | 0 | 0 | 0 | 1 | 1 | 1 | 1 |
| $gew(\{0,3\})$ | 0 | 0 | 0 | 0 | 0 | 0 | 0 | 0 | 1 | 1 |
| $gew(\{1,2\})$ | 0 | 0 | 0 | 1 | 2 | 3 | 3 | 3 | 3 | 3 |

EP 0 629 302 B1

13

# FIG 6

Anzahl maximal möglicher Konflikte zwischen
[Prozedur X und Prozedur Y ] z.B.

[Proz. 1,Proz. 3] = 4  } A
[Proz. 2,Proz. 4] = 6

Anzahl der Cache-Blöcke, auf die sowohl
(Prozedur X und Prozedur Y ) abgebildet werden

(Proz. 1,Proz. 3) = 3  
(Proz. 2,Proz. 3) = 1  } B
(Proz. 2,Proz. 4) = 2